# EUROPEAN PATENT APPLICATION

(11) **EP 4 498 465 A1**
(43) Date of publication of application: **29.01.2025**
(21) Application number: 23774447.9
(22) Date of filing: 03.03.2023
(51) Int. Cl.: H01M 10/052, H01M 4/131, H01M 4/36, H01M 10/0569

(54) **NON-AQUEOUS ELECTROLYTE SECONDARY BATTERY**

(30) Priority: 23.03.2022 JP 2022046775
(71) Applicant: Panasonic Energy Co., Ltd., Osaka 570-8511 (JP); Panasonic Holdings Corporation, Osaka, 571-8501 (JP)
(72) Inventor: IKEDA, Tomoki, Kadoma-shi, Osaka 571-0057 (JP); AOTANI, Masashi, Kadoma-shi, Osaka 571-0057 (JP); SAKITANI, Nobuhiro, Kadoma-shi, Osaka 571-0057 (JP); DEGUCHI, Masaki, Kadoma-shi, Osaka 571-0057 (JP)
(74) Representative: Novagraaf International SA
(86) International application number: PCT/JP2023/008039
(87) International publication number: WO 2023/181848

(57) **Abstract**

Provided is a non-aqueous electrolyte secondary battery having a high capacity and excellent storage characteristics and cycle characteristics. In this non-aqueous electrolyte secondary battery, which is one example in the embodiments: a non-aqueous electrolytic solution includes a cyclic carbonate and a linear carbonate in a 3:7 to 6:4 volume ratio; a positive electrode mixture layer includes first lithium metal composite oxide particles which are non-aggregated particles having a median diameter of 2 to 10 µm on a volume basis and second lithium metal composite oxide particles which are secondary particles having a median diameter of 10 to 30 µm on a volume basis and which are obtained by the aggregation of primary particles having an average particle diameter of 50 nm to 2 µm; if the positive electrode mixture layer is divided into two equal regions in the thickness direction and the regions are defined as a first region and a second region sequentially from the surface side of a positive electrode, the content of the first lithium metal composite oxide particles in the positive electrode mixture layer is higher in the first region than in the second region.

## Description

### TECHNICAL FIELD

The present disclosure relates to a non-aqueous electrolyte secondary battery.

### BACKGROUND ART

With the spread of non-aqueous electrolyte secondary batteries for on-vehicle use and storage use in recent years, a non-aqueous electrolyte secondary battery having a high capacity and excellent cycle characteristics has been required. Since a positive electrode significantly affects battery performance including the battery capacity and the cycle characteristics, there have been many investigations on the positive electrode. For example, Patent Literature 1 discloses a non-aqueous electrolyte secondary battery using single-crystal particles being non-aggregated particles and/or secondary particles formed by aggregation of a plurality of primary particles as a positive electrode active material. Patent Literature 1 describes an effect of improving the cycle characteristics of the battery.

### CITATION LIST

### PATENT LITERATURE

PATENT LITERATURE 1: Japanese Unexamined Patent Application Publication No. 2020-53386

### SUMMARY

In power storage use and the like, a high capacity and storage characteristics are required in addition to the cycle characteristics. Patent Literature 1 does not investigate the storage characteristics. According to intensive studies by the present inventors, it has been found that using the non-aggregated particles as the positive electrode active material improves the cycle characteristics but lowers the battery capacity due to decrease in a filling property of the positive electrode active material. Further, it has been found that the high capacity and the good cycle characteristics cannot be achieved at the same time in some cases even when a mixture of the non-aggregated particles and the secondary particles is used. The invention described in Patent Literature 1 does not investigate the battery having the high capacity and improved storage characteristics and cycle characteristics, and still has room for improvement.

It is an advantage of the present disclosure to provide a non-aqueous electrolyte secondary battery having a high capacity and excellent storage characteristics and cycle characteristics.

A non-aqueous electrolyte secondary battery of an aspect of the present disclosure comprises: a positive electrode; a negative electrode; and a non-aqueous electrolyte liquid, wherein the non-aqueous electrolyte liquid includes a cyclic carbonate and a chain carbonate at a volume ratio of from 3:7 to 6:4, the positive electrode has a positive electrode core and a positive electrode mixture layer formed on a surface of the positive electrode core, the positive electrode mixture layer includes first lithium-metal composite oxide particles being non-aggregated particles having a median diameter on a volumetric basis of greater than or equal to 2 µm and less than or equal to 10 µm, and second lithium-metal composite oxide particles being secondary particles formed by aggregation of primary particles having an average particle diameter of greater than or equal to 50 nm and less than or equal to 2 µm, the secondary particles having a median diameter on a volumetric basis of greater than or equal to 10 µm and less than or equal to 30 µm, and when the positive electrode mixture layer is bisected in a thickness direction and is defined as a first region and a second region in this order from a surface side of the positive electrode, a content of the first lithium-metal composite oxide particles in the first region is higher than in the second region in the positive electrode mixture layer.

According to an aspect of the present disclosure, a non-aqueous electrolyte secondary battery having a high capacity and excellent storage characteristics and cycle characteristics can be provided.

### BRIEF DESCRIPTION OF DRAWINGS

FIG. 1 is a sectional view of a non-aqueous electrolyte secondary battery of an example of an embodiment.

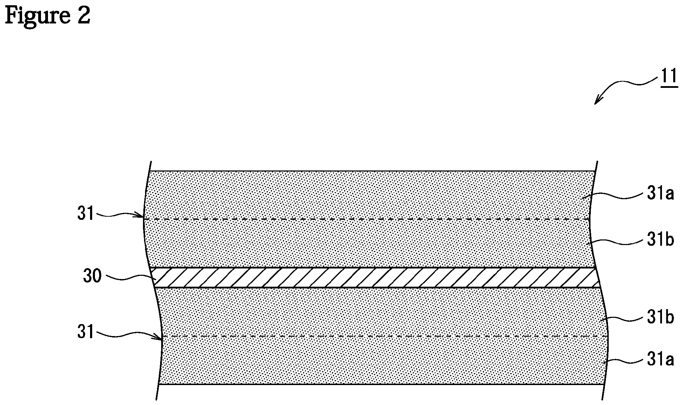

FIG. 2 is a sectional view of a positive electrode of an example of an embodiment.

### DESCRIPTION OF EMBODIMENTS

As described above, it is an important challenge to obtain a non-aqueous electrolyte secondary battery having a high capacity and excellent storage characteristics and cycle characteristics. The present inventors have made intensive investigation to solve this challenge, and have consequently found that the non-aqueous electrolyte secondary battery that has solved the above challenge can be obtained by using specific non-aggregated particles and specific secondary particles in combination as a positive electrode active material, setting a content (mass) of the non-aggregated particles on a surface side to be higher than that on a core side of the positive electrode mixture layer, and setting a ratio between a cyclic carbonate and a chain carbonate in a non-aqueous electrolyte liquid to be within a specific range.

In the non-aqueous electrolyte liquid, setting the ratio of the cyclic carbonate to the chain carbonate to be high inhibits decomposition of the non-aqueous electrolyte liquid during charge and discharge to improve the storage characteristics. However, the increase in the proportion of the cyclic carbonate increases a viscosity of the non-aqueous electrolyte liquid, and accordingly permeation of the non-aqueous electrolyte liquid in the positive electrode mixture layer is inhibited, which tends to deteriorate the cycle characteristics. Here, setting the content of the non-aggregated particles in the positive electrode mixture layer such that the first region on the surface side of the positive electrode mixture layer > the second region on the core side may achieve a pathway of the non-aqueous electrolyte liquid to improve the cycle characteristics. Use of the specific non-aggregated particles and the specific secondary particles may also attempt to increase the capacity. Although use of the non-aggregated particles deteriorates a filling property of the positive electrode active material, use in combination with the secondary particles generates particle cracking in a compressing step of the positive electrode to increase the filling density of the active material.

Hereinafter, an example of embodiments of a positive electrode for a non-aqueous electrolyte secondary battery according to the present disclosure and a non-aqueous electrolyte secondary battery using this positive electrode will be described in detail with reference to the drawings. It is anticipated in advance to selectively combine a plurality of embodiments and modified examples described below.

Hereinafter, a cylindrical battery in which a wound electrode assembly 14 is housed in a bottomed cylindrical exterior housing can 16 will be exemplified, but an exterior of the battery is not limited to a cylindrical exterior housing can, and may be, for example, a rectangular exterior housing can (rectangular battery), a coin-shaped exterior housing can (coin-shaped battery), or an exterior composed of laminated sheets including a metal layer and a resin layer (laminate battery). The electrode assembly may be a laminated electrode assembly in which a plurality of positive electrodes and a plurality of negative electrodes are alternately stacked with a separator interposed therebetween.

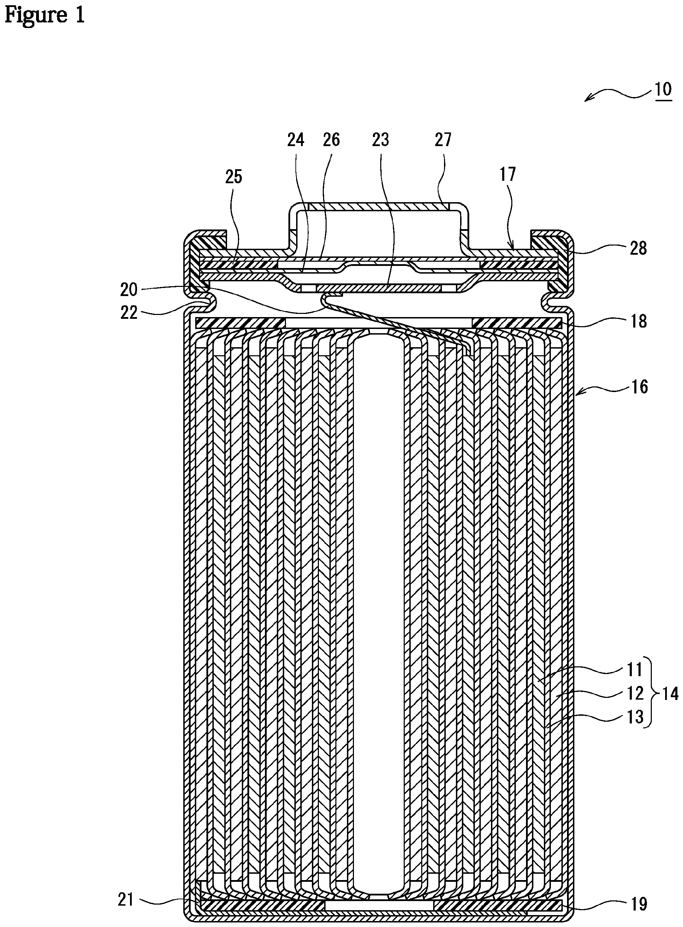

FIG. 1 is a sectional view of a non-aqueous electrolyte secondary battery 10 of an example of an embodiment. As illustrated in FIG. 1, the non-aqueous electrolyte secondary battery 10 comprises the wound electrode assembly 14, a non-aqueous electrolyte liquid, and the exterior housing can 16 housing the electrode assembly 14 and the non-aqueous electrolyte liquid. The electrode assembly 14 has a positive electrode 11, a negative electrode 12, and a separator 13, and has a wound structure in which the positive electrode 11 and the negative electrode 12 are spirally wound with the separator 13 interposed therebetween. The exterior housing can 16 is a bottomed cylindrical metallic container having an opening at one side in an axial direction, and the opening of the exterior housing can 16 is sealed with a sealing assembly 17. Hereinafter, for convenience of description, the sealing assembly 17 side of the battery will be described as the upper side, and the bottom side of the exterior housing can 16 will be described as the lower side.

All of the positive electrode 11, negative electrode 12, and separator 13 that constitute the electrode assembly 14 have an elongated band-shape, and are spirally wound to be alternately stacked in a radial direction of the electrode assembly 14. To prevent precipitation of lithium, the negative electrode 12 is formed to be one size larger than the positive electrode 11. That is, the negative electrode 12 is formed to be longer than the positive electrode 11 in a longitudinal direction and a width direction (short direction). The two separators 13 are formed to be one size larger than at least the positive electrode 11, and disposed to, for example, sandwich the positive electrode 11. The electrode assembly 14 comprises: a positive electrode lead 20 connected to the positive electrode 11 by welding or the like; and a negative electrode lead 21 connected to the negative electrode 12 by welding or the like.

Insulating plates 18 and 19 are disposed on the upper and lower sides of the electrode assembly 14, respectively. In the example illustrated in FIG. 1, the positive electrode lead 20 extends through a through hole in the insulating plate 18 toward a side of the sealing assembly 17, and the negative electrode lead 21 extends along an outside of the insulating plate 19 toward the bottom side of the exterior housing can 16. The positive electrode lead 20 is connected to a lower surface of an internal terminal plate 23 of the sealing assembly 17 by welding or the like, and a cap 27, which is a top plate of the sealing assembly 17 electrically connected to the internal terminal plate 23, becomes a positive electrode terminal. The negative electrode lead 21 is connected to a bottom inner surface of the exterior housing can 16 by welding or the like, and the exterior housing can 16 becomes a negative electrode terminal.

A gasket 28 is provided between the exterior housing can 16 and the sealing assembly 17 to achieve sealability inside the battery. On the exterior housing can 16, a grooved portion 22 in which part of a side wall thereof projects inside for supporting the sealing assembly 17 is formed. The grooved portion 22 is preferably formed in a circular shape along a circumferential direction of the exterior housing can 16, and supports the sealing assembly 17 with the upper surface thereof. The sealing assembly 17 is fixed on the upper part of the exterior housing can 16 with the grooved portion 22 and with an end of the opening of the exterior housing can 16 caulked to the sealing assembly 17.

The sealing assembly 17 has a stacked structure of the internal terminal plate 23, a lower vent member 24, an insulating member 25, an upper vent member 26, and the cap 27 in this order from the electrode assembly 14 side. Each member constituting the sealing assembly 17 has, for example, a disk shape or a ring shape, and each member except for the insulating member 25 is electrically connected to each other. The lower vent member 24 and the upper vent member 26 are connected at respective central parts thereof, and the insulating member 25 is interposed between the respective circumferential parts of the vent members 24 and 26. If the internal pressure of the battery increases due to abnormal heat generation, the lower vent member 24 is deformed so as to push the upper vent member 26 up toward the cap 27 side and breaks, and thereby a current pathway between the lower vent member 24 and the upper vent member 26 is cut off. If the internal pressure further increases, the upper vent member 26 breaks, and gas is discharged through the cap 27 opening.

Hereinafter, the positive electrode 11, the negative electrode 12, the separator 13, and the non-aqueous electrolyte liquid, particularly the positive electrode 11 and the non-aqueous electrolyte liquid will be described in detail.

### [Positive Electrode]

The positive electrode 11 comprises a positive electrode core 30 and a positive electrode mixture layer 31 formed on a surface of the positive electrode core 30. For the positive electrode core 30, a foil of a metal stable within a potential range of the positive electrode 11, such as aluminum and an aluminum alloy, a film in which such a metal is disposed on a surface layer, and the like may be used. An example of the positive electrode core 30 is foil of aluminum or an aluminum alloy having a thickness of greater than or equal to 10 µm and less than or equal to 20 µm. The positive electrode mixture layer 31 includes the positive electrode active material, a conductive agent, and a binder, and preferably formed on both the surfaces of the positive electrode core 30. A thickness of the positive electrode mixture layer 31 is, for example, greater than or equal to 30 µm and less than or equal to 100 µm on one side of the positive electrode core 30. The positive electrode 11 may be produced by, for example, applying a positive electrode mixture slurry including the positive electrode active material, the conductive agent, the binder, and the like on the positive electrode core 30, and drying and then compressing the coating film to form the positive electrode mixture layers 31 on both the surfaces of the positive electrode core 30.

Examples of the conductive agent included in the positive electrode mixture layer 31 include carbon materials such as carbon black, acetylene black, Ketjenblack, graphite, carbon nanotube, carbon nanofiber, and graphene. A content of the conductive agent is, for example, greater than or equal to 0.01 parts by mass and less than or equal to 10 parts by mass, and preferably greater than or equal to 0.05 parts by mass and less than or equal to 5 parts by mass, based on 100 parts by mass of the positive electrode active material.

Examples of the binder included in the positive electrode mixture layer 31 include fluorine-containing resins such as polytetrafluoroethylene (PTFE) and polyvinylidene fluoride (PVdF), polyacrylonitrile (PAN), a polyimide, an acrylic resin, and a polyolefin. These resins may be used in combination with carboxymethylcellulose (CMC) or a salt thereof, polyethylene oxide (PEO), and the like. A content of the binder is, for example, greater than or equal to 0.1 parts by mass and less than or equal to 10 parts by mass, and preferably greater than or equal to 0.5 parts by mass and less than or equal to 5 parts by mass, based on 100 parts by mass of the positive electrode active material.

The positive electrode mixture layer 31 includes a particle lithium-metal composite oxide as the positive electrode active material. The lithium-metal composite oxide is a composite oxide containing metal elements such as Co, Mn, Ni, and Al, in addition to Li. The metal element constituting the lithium-metal composite oxide is, for example, at least one selected from the group consisting of Mg, Al, Ca, Sc, Ti, V, Cr, Mn, Fe, Co, Ni, Cu, Zn, Ga, Ge, Y, Zr, Sn, Sb, W, Pb, and Bi. Among them, at least one selected from the group consisting of Co, Ni, and Mn is preferably contained. An example of a preferable composite oxide is a lithium-metal composite oxide containing Ni, Co, and Mn, or a lithium-metal composite oxide containing Ni, Co, and Al.

The positive electrode mixture layer 31 includes two kinds of lithium-metal composite oxide particles. When the positive electrode mixture layer 31 is bisected in a thickness direction and is defined as a first region 31a and a second region 31b in this order from a surface side of the positive electrode 11, materials included in the first region 31a and the second region 31b are different from each other. In the present embodiment, the first region 31a and the second region 31b contain different kinds of lithium-metal composite oxide particles. When each region contains two kinds of the lithium-metal composite oxide particles, mass ratios thereof are different. On the other hand, kinds and contents of the conductive agent and the binder may be same as or different from the first region 31a and the second region 31b.

The positive electrode mixture layer 31 includes: first lithium-metal composite oxide particles being non-aggregated particles; and second lithium-metal composite oxide particles being secondary particles formed by aggregation of primary particles having an average particle diameter of greater than or equal to 50 nm and less than or equal to 2 µm. As the positive electrode active material, the positive electrode mixture layer 31 may contain only the first and second lithium-metal composite oxide particles, and may contain a third lithium-metal composite oxide particles within a range not impairing the object of the present disclosure. An example of the third lithium-metal composite oxide particles includes composite oxide particles not satisfying a condition of a particle diameter described later.

A median diameter on a volumetric basis (hereinafter, which may be referred to as "D50") of the first lithium-metal composite oxide particles is greater than or equal to 2 µm and less than or equal to 10 µm, and preferably greater than or equal to 3 µm and less than or equal to 8 µm. D50 of the second lithium-metal composite oxide particles is greater than or equal to 10 µm and less than or equal to 30 µm, and preferably greater than or equal to 12 µm and less than or equal to 20 µm. The D50 means a particle diameter at which a cumulative frequency is 50% from a smaller particle diameter side in a particle size distribution on a volumetric basis. The particle size distribution of the lithium-metal composite oxide particles may be measured by using a laser diffraction-type particle size distribution measuring device (for example, MT3000II, manufactured by MicrotracBEL Corp.) with water as a dispersion medium.

The first lithium-metal composite oxide particles, which are particles having no particle boundary inside thereof, are primary particles of a single crystal, for example. The crystallinity of the lithium-metal composite oxide particles may be confirmed by using a scanning ion microscope. Note that the first lithium-metal composite oxide particles synthesized by a manufacturing method described later may include particles including less than or equal to five primary particles, for example.

The second lithium-metal composite oxide particles are secondary particles formed by aggregation of primary particles having an average particle diameter of greater than or equal to 50 nm and less than or equal to 2 µm, preferably greater than or equal to 500 nm and less than or equal to 2 µm. In the second lithium-metal composite oxide particles, there is a particle boundary of the primary particles. The primary particles may be confirmed by observing the second lithium-metal composite oxide particles with a scanning electron microscope (SEM). Note that, the plurality of the primary particles is adhered each other with strength so as not to be disintegrated by applying a strong force during, for example, crushing after synthesizing the second lithium-metal composite oxide particles and preparing the positive electrode mixture slurry.

The average particle diameter of the primary particles constituting the second lithium-metal composite oxide particles is determined by analyzing a SEM image of a particle cross section. For example, the positive electrode 11 is embedded in a resin, the cross section is produced by cross-section polisher (CP) processing, and this cross section is photographed with an SEM. From the SEM image, 30 primary particles are randomly selected to observe the particle boundary, and a diameter of a circumscribed circle of each of the 30 primary particles is determined to specify an average value thereof as the average particle diameter.

Each of the lithium-metal composite oxide particles may be synthesized by a method described in Example, described later. The first lithium-metal composite oxide particles may be synthesized by setting a pH of an alkaline aqueous solution used for synthesizing a precursor including Ni, Co, Mn, Al, and the like (metal composite hydroxide) to be higher and/or setting a calcining temperature of the precursor to be higher than that in a case of synthesis of the second lithium-metal composite oxide particles, for example. An example of a preferable pH of the alkaline aqueous solution is greater than or equal to 10 and less than or equal to 11, and an example of a preferable calcination temperature is greater than or equal to 950°C and less than or equal to 1100°C. When the second lithium-metal composite oxide particles are synthesized, an alkaline aqueous solution having a pH of greater than or equal to 9 and less than or equal to 10 is used, and the calcination temperature is set to be less than or equal to 950°C, for example.

Each of the lithium-metal composite oxide particles is constituted of, for example, a lithium-metal composite oxide having a hexagonal crystalline structure belonging to the space group R-3m, and preferably constituted of LiNiₓCo_{y}Mn_{z}O₂ (0.3 < x < 0.6, x + y + z = 1) or LiNiₓCo_{y}Al_{z}O₂ (0.8 < x < 0.95, x + y + z = 1) as a main component. Here, the main component means a component at the largest mass among components constituting the lithium-metal composite oxide particles. Compositions of each of the lithium-metal composite oxide particles may be same as or different from each other.

Although the positive electrode mixture layer 31 contains the first and second lithium-metal composite oxide particles, as described above, the materials included in the first region 31a and the second region 31b are different from each other. A content of the first lithium-metal composite oxide particles in the positive electrode mixture layer 31 is not uniform, and is larger in the first region 31a than in the second region 31b.

The first lithium-metal composite oxide particles is less likely to undergo particle cracking than the second lithium-metal composite oxide particles in the manufacturing step of the positive electrode 11, and thereby the pathway of the electrolyte liquid in the first region 31a is achieved by setting the first lithium-metal composite oxide particles to be present at a larger amount in the first region 31a, which is on the surface side of the positive electrode mixture layer 31. In this case, it is considered that the electrolyte liquid has good permeability into the second region 31b to improve the cycle characteristics.

A proportion of the mass of the first lithium-metal composite oxide particles relative to the mass of the positive electrode active material in the first region 31a is preferably higher than a proportion of the mass of the first lithium-metal composite oxide particles relative to the mass of the positive electrode active material in the second region 31b. Contents of the positive electrode active material in the first region 31a and the second region 31b may be different, but preferably substantially the same. The content of the positive electrode active material is, for example, greater than or equal to 90 mass% and less than or equal to 99.9 mass%, and preferably greater than or equal to 95 mass% and less than or equal to 99 mass%, based on the mass of the positive electrode mixture layer 31.

The first region 31a may contain substantially only the first lithium-metal composite oxide particles as the positive electrode active material. In addition, the first lithium-metal composite oxide particles may be contained only in the first region 31a and may be absent in the second region 31b, for example. When the second lithium-metal composite oxide particles are present in the first region 31a, a mass ratio of each of the composite oxide particles in the first region 31a is preferably the first lithium-metal composite oxide particles > the second lithium-metal composite oxide particles.

The content of the second lithium-metal composite oxide particles is larger in the second region 31b than in the first region 31a. A proportion of the mass of the second lithium-metal composite oxide particles relative to the mass of the positive electrode active material in the second region 31b is preferably higher than a proportion of the mass of the second lithium-metal composite oxide particles relative to the mass of the positive electrode active material in the first region 31a.

The second lithium-metal composite oxide particles may be filled at a large amount per unit volume compared with the first lithium-metal composite oxide particles, and thereby use of this may densify the positive electrode mixture layer 31 to contribute to increase in the capacity of the battery. A larger amount of the second lithium-metal composite oxide particles being present on the positive electrode core 30 side, which has a small effect on the permeability of the electrolyte liquid, may maintain the good cycle characteristics and increase the capacity.

The second region 31b may contain substantially only the second lithium-metal composite oxide particles as the positive electrode active material. The second lithium-metal composite oxide particles may be contained only in the second region 31b and may be absent in the first region 31a, for example. When the first lithium-metal composite oxide particles are present in the second region 31b, a mass ratio of each of the composite oxide particles in the second region 31b is preferably the first lithium-metal composite oxide particles < the second lithium-metal composite oxide particles.

As noted above, the first region 31a may contain the first and second lithium-metal composite oxide particles. In this case, a preferable mass ratio between the first lithium-metal composite oxide particles and the second lithium-metal composite oxide particles in the first region 31a is from 60:40 to 90:10, and more preferably from 65:35 to 80:20. The mass ratio of each of the composite oxide particles within this range easily achieves both the high capacity and the excellent cycle characteristics.

The contents of the first and second lithium-metal composite oxide particles in the second region 31b may be set to be equal, but preferably set such that the first lithium-metal composite oxide particles < the second lithium-metal composite oxide particles, or only the second lithium-metal composite oxide particles are used as the positive electrode active material. When the second region 31b contains the first lithium-metal composite oxide particles, a mass ratio between the first lithium-metal composite oxide particles and the second lithium-metal composite oxide particles in the second region 31b is from 10:90 to 40:60, and more preferably from 20:80 to 35:65. The mass ratio of each of the composite oxide particles within this range easily achieves both the high capacity and the excellent cycle characteristics.

### [Negative Electrode]

The negative electrode 12 comprises a negative electrode core and a negative electrode mixture layer formed on a surface of the negative electrode core. For the negative electrode core, a foil of a metal stable within a potential range of the negative electrode 12, such as copper and a copper alloy, a film in which such a metal is disposed on a surface layer, and the like may be used. An example of the negative electrode core is foil of copper or copper alloy having a thickness of greater than or equal to 5 µm and less than or equal to 15 µm. The negative electrode mixture layer includes the negative electrode active material and a binder, and preferably formed on both the surfaces of the negative electrode core. A thickness of the negative electrode mixture layer is, for example, greater than or equal to 30 µm and less than or equal to 100 µm on one side of the negative electrode core. The negative electrode 12 may be produced by applying a negative electrode mixture slurry including the negative electrode active material, the binder, and the like on the negative electrode core, and drying and then compressing the coating film to form the negative electrode mixture layers on both the surfaces of the negative electrode core.

The negative electrode mixture layer includes, for example, a carbon-based active material to reversibly occlude and release lithium ions, as the negative electrode active material. A preferable carbon-based active material is a graphite such as: a natural graphite such as flake graphite, massive graphite, and amorphous graphite; or an artificial graphite such as massive artificial graphite (MAG) and graphitized mesophase-carbon microbead (MCMB). For the negative electrode active material, a Si-based active material composed of at least one of the group consisting of Si and a Si-containing compound may also be used, and the carbon-based active material and the Si-based active material may be used in combination.

For the binder included in the negative electrode mixture layer, fluorine-containing resins such as PTFE and PVdF, PAN, a polyimide, an acrylic resin, a polyolefin, styrene-butadiene rubber (SBR), and the like may be used. The negative electrode mixture layer may include CMC or a salt thereof, polyacrylic acid (PAA) or a salt thereof, polyvinyl alcohol (PVA), and the like. A content of the binder is, for example, greater than or equal to 0.1 parts by mass and less than or equal to 10 parts by mass, and preferably greater than or equal to 0.5 parts by mass and less than or equal to 5 parts by mass, based on 100 parts by mass of the negative electrode active material. With the negative electrode mixture layer, conductive agents such as carbon black, acetylene black, and Ketjenblack may be added.

### [Separator]

For the separator 13, a porous sheet having an ion permeation property and an insulation property is used. Specific examples of the porous sheet include a fine porous thin film, a woven fabric, and a nonwoven fabric. For a material of the separator, a polyolefin such as polyethylene, and polypropylene, cellulose, and the like are preferable. The separator 13 may have a single-layer structure or a stacked structure. On a surface of the separator 13, a resin layer having high heat resistance, such as an aramid resin, may be formed.

On a boundary between the separator 13 and at least one selected from the positive electrode 11 and the negative electrode 12, a filler layer including an inorganic filler may be formed. Examples of the inorganic filler include oxides containing metals such as Ti, Al, Si, and Mg, and a phosphoric acid compound. The filler layer may be formed by applying a slurry containing the filler on the surface of the positive electrode 11, the negative electrode 12, or the separator 13.

### [Non-Aqueous Electrolyte Liquid]

The non-aqueous electrolyte liquid includes a non-aqueous solvent and an electrolyte salt dissolved in the non-aqueous solvent. The non-aqueous solvent for the non-aqueous electrolyte liquid includes a cyclic carbonate and a chain carbonate at a volume ratio of from 3:7 to 6:4. This may achieve both the storage characteristics and the cycle characteristics. Examples of the cyclic carbonate include ethylene carbonate (EC), propylene carbonate (PC), and butylene carbonate. Examples of the chain carbonate include dimethyl carbonate (DMC), ethyl methyl carbonate (EMC), diethyl carbonate (DEC), methyl propyl carbonate, ethyl propyl carbonate, and methyl isopropyl carbonate.

The non-aqueous electrolyte liquid may contain a non-aqueous solvent other than the cyclic carbonate and the chain carbonate. A total content of the cyclic carbonate and the chain carbonate in the non-aqueous solvent is preferably greater than or equal to 80 vol%, and more preferably greater than or equal to 90 vol% based on a total volume of the non-aqueous solvent. The non-aqueous solvent may be composed of only the cyclic carbonate and the chain carbonate.

Examples of the non-aqueous solvent other than the cyclic carbonate and the chain carbonate include esters other than the carbonate, ethers, nitriles such as acetonitrile, and amides such as dimethylformamide. The non-aqueous solvent may contain a halogen-substituted derivative in which hydrogen of these solvents is at least partially substituted with a halogen atom such as fluorine. Examples of the halogen-substituted derivative include fluorinated cyclic carbonates such as fluoroethylene carbonate (FEC), fluorinated chain carbonates, and fluorinated chain carboxylates such as methyl fluoropropionate (FMP).

Examples of the esters other than the carbonate include: cyclic carboxylates such as γ-butyrolactone (GBL) and γ-valerolactone (GVL); and chain carboxylates such as methyl acetate, ethyl acetate, propyl acetate, methyl propionate (MP), and ethyl propionate.

The ethers include cyclic ethers and chain ethers. Examples of the cyclic ethers include 1,3-dioxolane, 4-methyl-1,3-dioxolane, tetrahydrofuran, 2-methyltetrahydrofuran, propylene oxide, 1,2-butylene oxide, 1,3-dioxane, 1,4-dioxane, 1,3,5-trioxane, furan, 2-methylfuran, 1,8-cineole, and a crown ether. Examples of the chain ethers include 1,2-dimethoxyethane, diethyl ether, dipropyl ether, diisopropyl ether, dibutyl ether, dihexyl ether, ethyl vinyl ether, butyl vinyl ether, methyl phenyl ether, ethyl phenyl ether, butyl phenyl ether, pentyl phenyl ether, methoxytoluene, benzyl ethyl ether, diphenyl ether, dibenzyl ether, o-dimethoxybenzene, 1,2-diethoxyethane, 1,2-dibutoxyethane, diethylene glycol dimethyl ether, diethylene glycol diethyl ether, diethylene glycol dibutyl ether, 1,1-dimethoxymethane, 1,1-diethoxyethane, triethylene glycol dimethyl ether, and tetraethylene glycol dimethyl ether.

The electrolyte salt is preferably a lithium salt. Examples of the lithium salt include LiBF₄, LiClO₄, LiPF₆, LiAsF₆, LiSbF₆, LiAlCl₄, LiSCN, LiCF₃SO₃, LiCF₃CO₂, Li(P(C₂O₄)F₄), LiPF₆₋ₓ(CₙF₂ₙ₊₁)ₓ (1 < x < 6, and n represents 1 or 2), LiB₁₀Cl₁₀, LiCl, LiBr, LiI, lithium chloroborane, a lithium lower aliphatic carboxylate, borate salts such as Li₂B₄O₇ and Li(B(C₂O₄)F₂), and imide salts such as LiN(SO₂CF₃)₂ and LiN(C₁F₂₁₊₁SO₂)(CₘF₂ₘ₊₁SO₂) {l and m represent integers of greater than or equal to 0}. The lithium salts may be used singly, or a plurality of types thereof may be mixed to be used. Among them, LiPF₆ is preferably used from the viewpoints of ion conductivity, electrochemical stability, and the like. A concentration of the lithium salt is, for example, greater than or equal to 0.8 mol/L and less than or equal to 2.6 mol/L.

### EXAMPLES

Hereinafter, the present disclosure will be described in more detail with Examples, but the present disclosure is not limited to these Examples.

### <Example 1>

### [Synthesis of First Lithium-Metal Composite Oxide Particles]

Nickel sulfate, cobalt sulfate, and manganese sulfate were mixed at predetermined proportions, and the mixture was uniformly mixed in an alkaline aqueous solution having a pH of greater than or equal to 10 and less than or equal to 11 to produce a precursor. Then, the precursor and lithium carbonate were mixed, the mixture was calcined at a temperature of 1000°C for 15 hours, and then crushed to obtain first lithium-metal composite oxide particles being non-aggregated particles. A composition and D50 of the particles were as follows.
Composition: LiNi_{0.5}Co_{0.2}Mn_{0.3}O₂
D50: 4.5 µm

### [Synthesis of Second Lithium-Metal Composite Oxide Particles]

Second lithium-metal composite oxide particles being secondary particles formed by aggregation of primary particles were obtained in the same manner as in the first lithium-metal composite oxide particles except that: the pH of the alkaline aqueous solution was changed to greater than or equal to 9 and less than or equal to 10; and the calcination temperature was changed to 900°C. A composition of the particles, an average particle diameter of the primary particles, and D50 of the secondary particles were as follows.
Composition: LiNi_{0.5}Co_{0.2}Mn_{0.3}O₂
Average particle diameter of primary particles: 1.6 µm
D50 of secondary particles (second lithium-metal composite oxide particles): 14.1 µm

### [Production of Positive Electrode]

The first lithium-metal composite oxide particles, acetylene black (AB), and polyvinylidene fluoride (PVdF) were mixed at a mass ratio of 98:1:1, and an appropriate amount of N-methyl-2-pyrrolidone (NMP) was added as a dispersion medium to prepare a first positive electrode mixture slurry having a solid-content concentration of 70 mass%. In addition, a second positive electrode mixture slurry was prepared in the same manner as the preparation of the first positive electrode mixture slurry except that the second lithium-metal composite oxide particles were used instead of the first lithium-metal composite oxide particles. Then, the second positive electrode mixture slurry was applied on both surfaces of a positive electrode core made of aluminum foil, subsequently the first positive electrode mixture slurry was applied on the coating film of the second positive electrode mixture slurry. The coating film was dried and compressed (linear pressure of 3000 N/m), and then cut to a predetermined electrode size to produce a positive electrode in which positive electrode mixture layers were formed on both surfaces of the positive electrode core. Amounts of the first positive electrode mixture slurry and the second positive electrode mixture slurry applied were the same.

### [Production of Negative Electrode]

As the negative electrode active material, a mixture of 95 parts by mass of a graphite powder and 5 parts by mass of a Si-containing compound represented by SiOₓ was used. Mixing 100 parts by mass of the negative electrode active material, 1 part by mass of sodium carboxymethylcellulose (CMC-Na), and water was performed, and 1.2 parts by mass of a styrene-butadiene rubber (SBR) dispersion was further mixed to prepare a negative electrode mixture slurry. Then, the negative electrode mixture slurry was applied on both surfaces of a negative electrode core made of copper foil. The coating film was dried and compressed, and then cut to a predetermined electrode size to produce a negative electrode in which negative electrode mixture layers were formed on both surfaces of the negative electrode core.

### [Preparation of Non-Aqueous Electrolyte Liquid]

Ethylene carbonate (EC) and dimethyl carbonate (DMC) were mixed at a volume ratio (25°C) of 6:4 to prepare a mixed solvent. Into 100 parts by mass of the mixed solvent, 5 parts by mass of vinylene carbonate (VC) was added, and LiPF₆ was dissolved so that the concentration was 1 mol/L to prepare a non-aqueous electrolyte liquid.

### [Production of Battery]

Lead terminals were attached to each of the above positive electrode and the above negative electrode, and the positive electrode and the negative electrode were spirally wound with a separator interposed therebetween to produce a wound electrode assembly. The electrode assembly was housed in a bottomed cylindrical exterior housing can, the negative electrode lead was welded with a bottom inner surface of the exterior housing can, and the positive electrode lead was welded with an internal terminal plate of a sealing assembly. Thereafter, the above non-aqueous electrolyte liquid was injected into the exterior housing can, an opening edge of the exterior housing can was caulked with the sealing assembly to produce a cylindrical secondary battery having a battery capacity of 2500 mAh.

### <Example 2>

A positive electrode and a non-aqueous electrolyte secondary battery were produced in the same manner as in Example 1 except that, in the preparation of the non-aqueous electrolyte liquid, EC and DMC were mixed at a volume ratio (25°C) of 5:5 to prepare a mixed solvent.

### <Example 3>

A positive electrode and a non-aqueous electrolyte secondary battery were produced in the same manner as in Example 1 except that, in the preparation of the non-aqueous electrolyte liquid, EC and DMC were mixed at a volume ratio (25°C) of 4:6 to prepare a mixed solvent.

### <Example 4>

A positive electrode and a non-aqueous electrolyte secondary battery were produced in the same manner as in Example 1 except that, in the preparation of the non-aqueous electrolyte liquid, EC and DMC were mixed at a volume ratio (25°C) of 3:7 to prepare a mixed solvent.

### <Comparative Example 1>

A positive electrode and a non-aqueous electrolyte secondary battery were produced in the same manner as in Example 1 except that: in the production of the positive electrode, the first positive electrode mixture slurry was applied on the surfaces of the positive electrode core, and the first positive electrode mixture slurry was applied again on the coating film of the first positive electrode mixture slurry; and in the preparation of the non-aqueous electrolyte liquid, EC and DMC were mixed at a volume ratio (25°C) of 5:5 to prepare a mixed solvent.

### <Comparative Example 2>

A positive electrode and a non-aqueous electrolyte secondary battery were produced in the same manner as in Example 1 except that: in the production of the positive electrode, the first positive electrode mixture slurry was applied on both the surfaces of the positive electrode core, and then the second positive electrode mixture slurry was applied on the coating film of the first positive electrode mixture slurry; and in the preparation of the non-aqueous electrolyte liquid, EC and DMC were mixed at a volume ratio (25°C) of 5:5 to prepare a mixed solvent.

### <Comparative Example 3>

A positive electrode and a non-aqueous electrolyte secondary battery were produced in the same manner as in Example 1 except that: in the production of the positive electrode, the second positive electrode mixture slurry was applied on both the surfaces of the positive electrode core, and the second positive electrode mixture slurry was applied again on the coating film of the second positive electrode mixture slurry; and in the preparation of the non-aqueous electrolyte liquid, EC and DMC were mixed at a volume ratio (25°C) of 5:5 to prepare a mixed solvent.

### <Comparative Example 4>

A positive electrode and a non-aqueous electrolyte secondary battery were produced in the same manner as in Example 1 except that, in the preparation of the non-aqueous electrolyte liquid, EC and DMC were mixed at a volume ratio (25°C) of 2:8 to prepare a mixed solvent.

### <Comparative Example 5>

A positive electrode and a non-aqueous electrolyte secondary battery were produced in the same manner as in Example 1 except that, in the preparation of the non-aqueous electrolyte liquid, EC and DMC were mixed at a volume ratio (25°C) of 7:3 to prepare a mixed solvent.

The positive electrodes and the batteries of Examples and Comparative Examples were evaluated by the following methods. Table 1 shows the evaluation results.

### [Density of Positive Electrode Mixture Layer (Filling Density)]

A thickness and a mass of the positive electrode were measured to calculate a density of the positive electrode mixture layer.

### [Storage Characteristics]

Under a temperature condition of 25°C, the battery was charged at a constant current of 0.2 It until a battery voltage reached 4.2 V. The battery was further charged at a constant voltage of 4.2 V until a current reached 0.05 It. Then, the battery was discharged at a constant current of 0.2 It until the battery voltage reached 2.5 V to measure an initial discharge capacity. Thereafter, the battery was charged at a constant current of 0.2 It until the battery voltage reached 4.2 V, then charged at a constant voltage of 4.2 V until the current reached 0.05 It, and the battery in this state was left to stand under a temperature condition of 55°C for 60 days. Then, the battery was left to be cooled until 25°C, and then charged at a constant current of 0.2 It until the battery voltage reached 4.2 V under a temperature condition of 25°C. The battery was further charged at a constant voltage of 4.2 V until the current reached 0.05 It. Then, the battery was discharged at a constant current of 0.2 It until the battery voltage reached 2.5 V to measure a discharge capacity after storage. The storage characteristics were calculated by using the following formula. Note that It (A) = Rated capacity (Ah) / 1 (h). Storage characteristics (%) = (Discharge capacity after storage / Initial discharge capacity) × 100

### [Cycle Characteristics (Capacity Retention)]

Under a temperature condition of 45°C, the battery was charged at a constant current of 0.2 It until a battery voltage reached 4.2 V. The battery was further charged at a constant voltage of 4.2 V until a current reached 0.05 It. Thereafter, the battery was discharged at a constant current of 0.2 It until the battery voltage reached 2.5 V. This charge and discharge was performed with 300 cycles, and capacity retention was calculated with the following formula. Capacity retention (%) = (Discharge capacity at 300th cycle / Discharge capacity at 1st cycle) × 100

**[Table 1]**

| | Positive electrode active material | | Non-aqueous electrolyte liquid | Evaluation results | | |
|---|---|---|---|---|---|---|
| | First region | Second region | EC:DMC [volume ratio] | Storage characteristics [%] | Capacity retention [%] | Filling density [g/cm³] |
| Example 1 | Non-aggregated particles | Secondary particles | 6:4 | 97 | 88 | 3.5 |
| Example 2 | Non-aggregated particles | Secondary particles | 5:5 | 96 | 88 | 3.5 |
| Example 3 | Non-aggregated particles | Secondary particles | 4:6 | 93 | 90 | 3.5 |
| Example 4 | Non-aggregated particles | Secondary particles | 3:7 | 92 | 91 | 3.5 |
| Comparative Example 1 | Non-aggregated particles | Non-aggregated particles | 5:5 | 96 | 89 | 3.2 |
| Comparative Example 2 | Secondary particles | Non-aggregated particles | 5:5 | 94 | 74 | 3.5 |
| Comparative Example 3 | Secondary particles | Secondary particles | 5:5 | 88 | 71 | 3.7 |
| Comparative Example 4 | Non-aggregated particles | Secondary particles | 2:8 | 68 | 80 | 3.5 |
| Comparative Example 5 | Non-aggregated particles | Secondary particles | 7:3 | 87 | 64 | 3.5 |

As shown in Table 1, the batteries of Examples have excellent storage characteristics and cycle characteristics. Further, the batteries of Examples have a high filling density of the positive electrode active material, and may attempt to increase the capacity of the battery. Meanwhile, the batteries of Comparative Examples have at least one of low storage characteristics, low capacity retention, and low filling density. Therefore, it is understood that the non-aqueous electrolyte secondary battery having the high capacity and achieving both the storage characteristics and cycle characteristics is obtained by using the specific non-aggregated particles and the specific secondary particles in combination as the positive electrode active material, setting the content of the non-aggregated particles to be larger on the surface side than on the core side of the positive electrode mixture layer, and setting the ratio between the cyclic carbonate and the chain carbonate in the non-aqueous electrolyte liquid to be within the specific range.

Note that the viscosity of the non-aqueous electrolyte liquid increases by increasing the concentration of the electrolyte salt instead of increasing the ratio of the cyclic carbonate relative to the chain carbonate, and thus the effect similar to the present embodiment is exhibited. For example, the cycle characteristics of the battery may be improved, regardless of the mixing ratio of the non-aqueous solvent, by setting the concentration of the electrolyte salt to be greater than or equal to 1.8 mol/L and less than or equal to 2.6 mol/L.

### REFERENCE SIGNS LIST

10 Non-aqueous electrolyte secondary battery, 11 Positive electrode, 12 Negative electrode, 13 Separator, 14 Electrode assembly, 16 Exterior housing can, 17 Sealing assembly, 18, 19 Insulating plate, 20 Positive electrode lead, 21 Negative electrode lead, 22 Grooved portion, 23 Internal terminal plate, 24 Lower vent member, 25 Insulating member, 26 Upper vent member, 27 Cap, 28 Gasket, 30 Positive electrode core, 31 Positive electrode mixture layer, 31a First region, 31b Second region

## Claims

1. A non-aqueous electrolyte secondary battery, comprising:
a positive electrode;
a negative electrode; and
a non-aqueous electrolyte liquid, wherein
the non-aqueous electrolyte liquid includes a cyclic carbonate and a chain carbonate, as a non-aqueous solvent, at a volume ratio of from 3:7 to 6:4,
the positive electrode has a positive electrode core and a positive electrode mixture layer formed on a surface of the positive electrode core,
the positive electrode mixture layer includes first lithium-metal composite oxide particles being non-aggregated particles having a median diameter on a volumetric basis of greater than or equal to 2 µm and less than or equal to 10 µm, and second lithium-metal composite oxide particles being secondary particles formed by aggregation of primary particles having an average particle diameter of greater than or equal to 50 nm and less than or equal to 2 µm, the secondary particles having a median diameter on a volumetric basis of greater than or equal to 10 µm and less than or equal to 30 µm, and
when the positive electrode mixture layer is bisected in a thickness direction and is defined as a first region and a second region in this order from a surface side of the positive electrode, a content of the first lithium-metal composite oxide particles in the first region is higher than in the second region in the positive electrode mixture layer.

2. The non-aqueous electrolyte secondary battery according to claim 1, wherein a total content of the cyclic carbonate and the chain carbonate in the non-aqueous solvent is greater than or equal to 80 vol% based on a total volume of the non-aqueous solvent.
